# EUROPÄISCHE PATENTSCHRIFT

(11) **EP 2 690 737 B1**
(45) Veröffentlichungstag und Bekanntmachung des Hinweises auf die Patenterteilung: **30.08.2017**
(21) Anmeldenummer: 12305909.9
(22) Anmeldetag: 25.07.2012
(51) Int. Cl.: H02G 15/105, H01B 12/02, H02G 15/34

(54) **Anordnung mit drei supraleitfähigen Phasenleitern**
Assembly with three superconducting phase conductors
Agencement avec trois fils de phase supraconducteurs

(43) Veröffentlichungstag der Anmeldung: 29.01.2014
(73) Patentinhaber: Nexans, 92400 Courbevoie (FR)
(72) Erfinder: Stemmle, Mark, Dr., 30625 Hannover (DE); West, Beate, Dr., 30163 Hannover (DE)
(74) Vertreter: Döring, Roger

(56) Entgegenhaltungen:
- EP-A2- 1 492 200
- DE-A1-102010 007 077
- US-A- 1 858 838
- US-A1- 2008 007 374
- US-B1- 6 262 375
- US-B2- 7 238 887

## Beschreibung

Die Erfindung bezieht sich auf eine Anordnung mit drei supraleitfähigen Phasenleitern, die in mindestens einem ein Kühlmittel führenden Kryostat angeordnet sind.

Ein supraleitfähiges Kabel bzw. ein entsprechender Phasenleiter hat einen elektrischen Leiter aus einem Material, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke, die kritische Stromstärke, nicht überschritten wird. Es sind supraleitfähige Kabel mit kaltem und mit warmem Dielektrikum bekannt.

Bei einem supraleitfähigen Kabel mit kaltem Dielektrikum ist der supraleitfähige Leiter von einem aus Schichten aus Isoliermaterial bestehenden Dielektrikum umgeben. Für das Dielektrikum können beispielsweise aus Polypropylen bestehende Bänder verwendet werden, die mit Papier laminiert sind. Ein solches Kabel besteht beispielsweise aus dem supraleitfähigen Leiter und einem konzentrisch dazu angeordneten supraleitfähigen Schirm, die durch das Dielektrikum voneinander getrennt und auf Abstand gehalten sind. Ein entsprechendes Kabel ist im Betrieb von einem ein Kühlmittel, beispielsweise flüssiger Stickstoff, führenden Kryostat umgeben, der beispielsweise aus zwei konzentrischen, durch eine thermische Isolierung gegeneinander isolierten, metallischen Rohren besteht. Das Kühlmittel durchdringt das Dielektrikum des Kabels und ist dadurch gleichzeitig Imprägniermittel für dasselbe.

Bei einem supraleitfähigen Kabel mit warmem Dielektrikum ist nur der supraleitfähige Leiter direkt in einem von einem Kühlmittel durchströmten Kryostat angebracht. Das Dielektrikum und der hier aus elektrisch normal leitendem Material, beispielsweise aus Kupfer, bestehende Schirm, sind außerhalb des Kryostats angeordnet.

Die DE 10 2010 007 077 A1 bezieht sich auf ein Drehstromkabelsystem mit Kompensationsschaltung zum Längenausgleich und zur Abschnittsverlängerung beim Cross-Bonding. Bei diesem System werden drei Einleiterkabel eingesetzt, die jeweils einen Leiter, eine denselben umgebende Isolierung und einen darüber angeordneten Schirm aufweisen. Die Kabel sind in drei Abschnitte unterteilt. Die Schirme der drei Abschnitte werden zyklisch gekreuzt und miteinander verbunden. Zwei der Abschnitte sind gleichlang, während der dritte länger und mit einem Kompensationskabel sowie einem Neutralpfadkabel kombiniert ist, die jeweils parallel zur Kabelstrecke angeordnet sind.

Aus der US 7,238,887 B2 geht eine Anordnung mit drei supraleitfähigen Phasenleitern hervor, die gemeinsam in einem aus zwei konzentrischen, thermisch gegeneinander isolierten Rohren bestehenden Kryostat angeordnet sind. Jeder Phasenleiter besteht aus einem supraleitfähigen Leiter, einem denselben umgebenden Dielektrikum und einem über demselben angebrachten supraleitfähigen Schirm bzw. Rückleiter. Die drei Phasenleiter liegen im Betrieb der Anordnung in einem den Kryostat durchströmenden Kühlmittel. Der Aufbau der Anordnung entspricht also dem geschilderten Kabel mit kaltem Dielektrikum.

Der Erfindung liegt die Aufgabe zugrunde, einerseits die eingangs geschilderte Anordnung einfacher zu gestalten und andererseits die Übertragungsverluste auf den in der Anordnung eingesetzten Phasenleitern zu reduzieren.

Diese Aufgabe wird durch die Gesamtheit der Merkmale des Patentanspruchs 1 gelöst.

Die Durchverbindung der Teilschirme der unterschiedlichen Abschnitte der drei Phasenleiter gemäß der Erfindung kann auch als "zyklisches Kreuzen" bezeichnet werden. Dieses zyklische Kreuzen der Teilschirme hat beim Betrieb der Anordnung mit Phasenleitern, die nach dem Prinzip "kaltes Dielektrikum" aufgebaut sind, den Vorteil, daß für den Schirm derselben insgesamt ein gegenüber supraleitfähigem Material wesentlich preiswerteres, normal leitendes Material eingesetzt werden kann, beispielsweise Kupfer. Wegen des zyklischen Kreuzens der Teilschirme werden in denselben keine Ströme induziert, so daß die Übertragungsverluste der Phasenleiter reduziert werden. Das gilt auch dann, wenn in der Anordnung Phasenleiter eingesetzt werden, die nach dem Prinzip "warmes Dielektrikum" aufgebaut sind. Es können dementsprechend mit dieser Anordnung unabhängig vom Aufbau der Phasenleiter höhere Leistungen übertragen werden.

Ausführungsbeispiele des Erfindungsgegenstandes sind in den Zeichnungen dargestellt.

Es zeigen:
Fig. 1 eine Anordnung mit drei supraleitfähigen Phasenleitern in schematischer Darstellung.
Fig. 2 und 3 Schnitte durch unterschiedlich aufgebaute Phasenleiter.
Fig. 4 eine Seitenansicht eines für den Einsatz in der Anordnung nach der Erfindung vorbereiteten Phasenleiters in schematischer Darstellung.
Fig. 5 ein Kreuzungsschema für die Durchverbindung der Schirme der Phasenleiter.

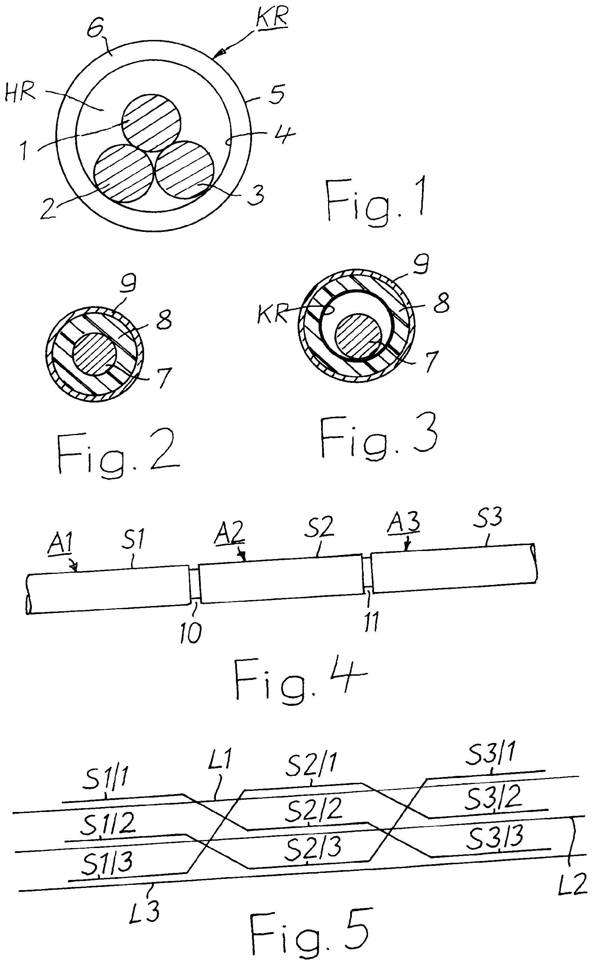

In Fig. 1 ist schematisch eine Anordnung mit drei supraleitfähigen Phasenleitern 1, 2 und 3 dargestellt, die gemeinsam in einem Kryostat KR angeordnet sind. Der Kryostat KR kann gemäß dem dargestellten Ausführungsbeispiel aus zwei konzentrisch und mit Abstand zueinander angeordneten Rohren 4 und 5 aus Metall bestehen, zwischen denen eine thermische Isolierung 6 angeordnet ist, vorzugsweise eine Vakuumisolierung. Die Rohre 4 und 5 bestehen vorzugsweise aus Edelstahl. Sie können quer zu ihrer Längsrichtung gewellt sein. Die Rohre 4 und 5 können auch aus einem ausreichend stabilen Kunststoff bestehen, der durch Glasfasern verstärkt sein kann. Es handelt sich dann um sogenannte "GFK-Rohre". Der Kryostat KR umschließt einen Hohlraum HR, in dem die drei Phasenleiter 1, 2 und 3 angeordnet sind und durch den beim Betrieb der Anordnung ein Kühlmittel geleitet wird, beispielsweise flüssiger Stickstoff. Der Kryostat KR soll mindestens ein von einer wirksamen thermischen Isolierung umgebenes Rohr aufweisen.

Die Phasenleiter 1, 2 und 3 bestehen gemäß Fig. 2 aus einem supraleitfähigen Leiter 7, dessen Aufbau in unterschiedlichen Ausführungsformen grundsätzlich bekannt ist, einem denselben umgebenden Dielektrikum 8 und einem über demselben liegenden Schirm 9. Da die drei Phasenleiter einschließlich Schirm in einem Kryostat angeordnet sind, handelt es sich also um Phasenleiter mit kaltem Dielektrikum.

Die drei Phasenleiter 1, 2 und 3 könnten auch getrennt voneinander jeweils in einem eigenen Kryostat untergebracht sein. Das gilt besonders für supraleitfähige Phasenleiter mit warmem Dielektrikum entsprechend Fig. 3, die immer als Einleiterkabel in einem separaten Kryostat angeordnet sind. Der supraleitfähige Leiter 7 ist hier in einem durch nur einen etwas dicker eingezeichneten Kreis angedeuteten Kryostat KR angeordnet, der vom Dielektrikum 8 umgeben ist, über welchem der Schirm 9 liegt. Der Kryostat KR ist vorzugsweise ebenso aufgebaut, wie der Kryostat KR nach Fig. 2.

Zur Vorbereitung der Phasenleiter 1, 2 und 3 für den Betrieb in einer Anordnung nach der Erfindung werden deren Schirme mindestens an zwei vorbestimmten Stellen vollständig aufgetrennt. Das ist beispielsweise in Fig. 4 für einen der Phasenleiter dargestellt. Die Anzahl der Stellen, an denen die Schirme der Phasenleiter aufgetrennt werden, hängt von deren Länge ab. Es sollen sich durch die Auftrennung der Schirme drei vorzugsweise gleichlange Abschnitte für jeden Phasenleiter ergeben oder ganzzahlige Vielfache von "3".

Der Schirm des in Fig. 4 dargestellten Phasenleiters ist durch Trennung an den Stellen 10 und 11 in drei Abschnitte A1, A2 und A3 unterteilt, die jeweils von Teilschirmen umgeben sind. Der Leiter des Phasenleiters und das denselben umgebende Dielektrikum können erhalten bleiben. Diese Vorbehandlung gilt für alle drei Phasenleiter 1, 2 und 3. Für den Betrieb der Anordnung werden die aufgetrennten Schirme der Phasenleiter entsprechend Fig. 5 mit zyklischer Kreuzung in Serie miteinander verbunden.

Jeder der drei Phasenleiter 1, 2 und 3 weist - wie bereits erwähnt - drei Abschnitte A1, A2 und A3 auf, die von entsprechenden Teilschirmen S1, S2 und S3 umgeben sind. Die Teilschirme sind gemäß Fig. 5 durch eine hinter einem Strich angegebene Kennzahl dem jeweiligen Phasenleiter zugeordnet. Deren supraleitfähige Leiter sind in Fig. 5 mit L1, L2 und L3 bezeichnet. Der Teilschirm S1/1 ist demnach der Teilschirm des ersten Abschnitts des Phasenleiters 1, während der Teilschirm S2/3 zum zweiten Abschnitt des Phasenleiters 3 gehört. Unter Berücksichtigung dieser Bezeichnungen werden die Teilschirme der Phasenleiter 1, 2 und 3 wie folgt durchverbunden:

Der Teilschirm S1/1 des Phasenleiters 1 wird mit dem Teilschirm S2/2 des Phasenleiters 2 und weiterführend mit dem Teilschirm S3/3 des Phasenleiters 3 elektrisch leitend verbunden. Analog dazu wird der Teilschirm S1/2 des zweiten Phasenleiters 2 zunächst mit dem Teilschirm S2/3 des Phasenleiters 3 und weiterführend mit dem Teilschirm S3/1 des Phasenleiters 1 verbunden. Ebenso wird der Teilschirm S1/3 des Phasenleiters 3 zunächst mit dem Teilschirm S2/1 des Phasenleiters 1 und weiterführend mit dem Teilschirm S3/2 des Phasenleiters 2 verbunden. Dadurch ist jeder Teilschirm eines Abschnitts eines Phasenleiters nur mit jeweils einem Teilschirm eines anderen Abschnitts der beiden anderen Phasenleiter verbunden. Die entsprechenden Verbindungen sind in Fig. 5 als sich kreuzende Linien entsprechend der Bezeichnung "zyklische Kreuzung" eingezeichnet.

Die Phasenleiter 1, 2 und 3 können - wie bereits erwähnt - bei der Ausführungsform "kaltes Dielektrikum" gemeinsam in einem Kryostat KR untergebracht sein, aber auch in drei getrennten Kryostaten - ebenso wie Phasenleiter mit warmem Dielektrikum. Bei der Variante mit drei Kryostaten müssen dieselben an den Trennstellen der Schirme ebenfalls aufgetrennt werden, damit die Teilschirme entsprechend obigen Ausführungen elektrisch leitend durchverbunden werden können. Die dabei entstandenen Teile der Kryostate müssen anschließend wieder elektrisch nicht leitend miteinander verbunden werden, beispielsweise mit GFK-Rohren.

Wenn die drei Phasenleiter 1, 2 und 3 in nur einem Kryostat KR untergebracht sind, wird die zyklische Kreuzung der Teilschirme mit Vorteil in Verbindungsmuffen durchgeführt.

## Patentansprüche

1. Anordnung mit drei supraleitfähigen Phasenleitern (1,2,3), die in mindestens einem ein Kühlmittel führenden Kryostat (KR) angeordnet sind, der aus mindestens einem eine thermische Isolierung aufweisenden Rohr besteht, und die aus einem supraleitfähigen Leiter (7) sowie einem Dielektrikum (8) und einem dasselbe umgebenden, elektrisch leitenden Schirm (9) aufgebaut sind, bei welcher die Schirme (S 1, S2, S3) jedes der drei Phasenleiter (1,2,3) zur Bildung von drei bzw. einem ganzzahligen Vielfachen von drei in Längsrichtung derselben hintereinander liegenden Abschnitten (A1,A2,A3) mit Teilschirmen (S1, S2, S3), einem ersten, einem zweiten und einem dritten Abschnitt, an zwei bzw. jeweils zwei mit Abstand zueinander angebrachten Stellen (10, 11) vollständig unterbrochen sind, bei welcher der Teilschirm eines ersten Abschnitts jedes Phasenleiters in Serienschaltung mit den Teilschirmen des zweiten und weiterführend des dritten Abschnitts der beiden anderen Phasenleiter elektrisch leitend verbunden ist und bei welcher die Schirme (S1, S2, S3) der drei Phasenleiter (1,2,3) aus normal leitendem Material bestehen, insbesondere aus Kupfer.

2. Anordnung nach Anspruch 1, **dadurch gekennzeichnet, daß** die Phasenleiter (1,2,3) in einem gemeinsamen Kryostat (KR) untergebracht sind.

3. Anordnung nach Anspruch 1, **dadurch gekennzeichnet, daß** jeder Phasenleiter (1,2,3) in einem eigenen Kryostat untergebracht ist.

## Claims

1. Arrangement with three superconductive phase conductors (1,2,3), which are mounted within at least one a cooling agent conducting cryostat (KR), which consists of at least one tube having a thermal insulation and which comprise a superconductive conductor (7) as well as a dielectric (8) and an electrically conductive screen (9) surrounding the dielectric, wherein each of the screens (S1,S2,S3) of the three phase conductors is completely interrupted at two locations (10,11) or respectively at two locations which are arranged at a distance from each other respectively into three, or a whole number multiple of three sections (A1,A2,A3) extending successively in the longitudinal direction in series with partial screens (S1,S2,S3), a first, a second and a third section, wherein the partial screen of a first section of each phase conductor is electrically conductively connected in series to the partial screen of the second phase conductor and further to the third partial screen of the two other phase conductors, and wherein the screens (S1,S2,S3) of the three phase conductors (1,2,3) consist of normal conductive material, preferably of copper.

2. Arrangement according to claim 1, **characterized in that** the phase conductors (1,2,3) are placed within a common cryostat (KR).

3. Arrangement according to claim 1, **characterized in that** each phase conductor (1,2,3) is placed within an own cryostat.

## Revendications

1. Arrangement comprenant trois conducteurs de phase (1, 2, 3) supraconducteurs, qui sont disposés dans au moins un cryostat (KR) conduisant un réfrigérant, lequel se compose d'au moins un tube possédant une isolation thermique, et qui sont constitués d'un conducteur supraconducteur (7) ainsi que d'un diélectrique (8) et d'un blindage (9) électriquement conducteur qui entoure celui-ci, avec lequel les blindages (S1, S2, S3) de chacun des trois conducteurs de phase (1, 2, 3) sont entièrement interrompus en deux points, ou deux points espacés l'un de l'autre, en vue de former trois, ou un multiple entier de trois, portions (Al, A2, A3) se trouvant les unes derrière les autres dans le sens longitudinal de celui-ci, pourvues de blindages partiels (S1, S2, S3) d'une première, d'une deuxième et d'une troisième portion, avec lequel le blindage partiel d'une première portion de chaque conducteur de phase est relié de manière électriquement conductrice dans un circuit série avec les blindages partiels de la deuxième et, dans la continuité, de la troisième portion des deux autres conducteurs de phase, et avec lequel les blindages (S1, S2, S3) des trois conducteurs de phase (1, 2, 3) sont composés d'un matériau conducteur normal, notamment de cuivre.

2. Arrangement selon la revendication 1, **caractérisé en ce que** les conducteurs de phase (1, 2, 3) sont logés dans un cryostat (KR) commun.

3. Arrangement selon la revendication 1, **caractérisé en ce que** chaque conducteur de phase (1, 2, 3) est logé dans son propre cryostat.
